Europäisches Patentamt

European Patent Office

Office européen des brevets

(11) Veröffentlichungsnummer: **0 359 933**
**A2**

## (12) EUROPÄISCHE PATENTANMELDUNG

(21) Anmeldenummer: 89113188.0

(22) Anmeldetag: 19.07.89

(51) Int. Cl.5: **B01F 7/00** , **B01F 3/04** , **A01C 3/02**

(30) Priorität: 17.09.88 DE 8811813 U

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: **Dorn, Helmut**
**Porchestrasse 21**
**D-8960 Kempten(DE)**

(72) Erfinder: **Dorn, Helmut**
**Porchestrasse 21**
**D-8960 Kempten(DE)**

(74) Vertreter: **Hübner, Hans-Jürgen, Dipl.-Ing.**
**Mozartstrasse 31**
**D-8960 Kempten/Allgäu(DE)**

(54) Gülle-Rührwerk.

(57) An einem Gehäuse (10) eines Tauchmotors ist eine Glocke (12) angeschraubt, die eine äußere konische Mantelfläche (16) und einen inneren zylindrischen Rohrstutzen (22) von etwa derselben axialen Länge aufweist. Eine Rührschnecke (14) taucht in den Rohrstutzen (22) bis nahe an die vordere Stirnfläche (24) des Motorgehäuses (10) ein. Ein Ansaugkasten (18) ist gegenüber dem zwischen konischer Mantelfläche (16) und Rohrstutzen (22) gebildeten hermetisch geschlossenen Blindraum abgedichtet. Luft wird durch einen Schlauch durch eine Einlaßöffnung (42) des Ansaugkastens (18) in diesen eingesaugt und verläßt diesen durch eine Auslaßöffnung (34) im Rohrstutzen (22), um feinblasig in die Gülle eingerührt zu werden.

FIG.1

EP 0 359 933 A2

Die Erfindung betrifft ein Gülle-Rührwerk mit den Merkmalen des Einleitungsteils von Patentanspruch 1.

Ein Gülle-Rührwerk dieser Art ist aus der DE-A-36 21 903 bekannt. Die Glocke besteht dabei aus einem zylindrischen hinteren Mantelabschnitt, an dessen Hinterende ein dünner Befestigungsring befestigt ist, einem steilen, sich nach vorn anschließenden konischen Mantelabschnitt und einem, sich an diesen nach vorn anschließenden konisch erweiternden Mantelabschnitt, dessen Konizität etwa derjenigen der Rührschnecke entspricht. Zwischen Rührschnecke und vorderem, rohrförmigen Mantelabschnitt herrscht ein maßgeblicher radialer Abstand. Der konische Mantelabschnitt soll zusammen mit dem hinteren zylindrischen Mantelabschnitt und dem Gehäuse eine Ringkammer bilden, die in einem schmalen Ringspalt in den Rührschneckenraum mündet. Dies erfordert einen weit konisch nach vorn gezogenen Abschnitt des Gehäuses bzw. bei einem ebenen Gehäuseende ein zusätzliches entsprechend geformtes Bauteil. Der Ringspalt soll die Luft über den ganzen Umfang der Rührschnecke zuführen, hat jedoch einmal den Nachteil, daß die Luftströmung wegen der Enge des Spaltes behindert wird und zum anderen, daß bei Stillstand des Gülle-Rührwerkes Feststoffe durch den Ringspalt in die Ringkammer eindringen, die dann austrocknen und verkleben, wodurch sich der Ringspalt zusezten kann.

Aufgabe der Erfindung ist es, das bekannte Gülle-Rührwerk dahingehend zu verbessern, daß unter Vermeidung jeglicher Verstopfungsgefahr des Luftzuführsystems die Saugleistung insbesondere in größeren Rührtiefen und die Schubleistung der Rührschnecke erhöht werden.

Diese Aufgabe wird bei einem Gülle-Rührwerk mit den Merkmalen des Einleitungsteils von Patentanspruch 1 durch dessen Kennzeichnungsmerkmale gelöst.

Mit der Erfindung werden ohne zusätzlichen Herstellungsaufwand maßgebliche Vorteile erreicht. Die mit Ausnahme des schmalen Ansaugkastens ununterbrochene konische äußere Mantelfläche ist für einen unbehinderten Güllefluß maßgeblich. Da der Mantel der Glocke nicht wie bei dem bekannten Rührwerk mehrfach abgewinkelt ist, kann die Güllestömung ungestört am Glockenmantel entlangströmen und Störungen dieser Strömung z.B. durch Totraumbildung mit Turbulenzen usw. werden vermieden. Der Ansaugkasten mündet in einer großflächigen etwa quadratischen Umfangsöffnung des Rohrstutzens, wobei die Rührschnecke sich vorzugsweise bis zum hinteren Ende des Rohrstutzens erstreckt, dessen axiale Länge etwa derjenigen des konischen Mantelabschnittes entspricht. Die große Länge des Rohrstutzens und die Dimensionierung des Laufspaltes zwischen Rohrstutzen und Rührschnecke mindestens am Vorderende der Glocke haben zur Folge, daß eine höhere Saugwirkung besonders in größeren Rührtiefen erzielt wird, als dies bei dem bekannten Gülle-Rührwerk der Fall ist. In dem zwischen konischer Mantelfläche und Rohrstutzen gebildeten Blindraum der Glocke kann keine Gülle mehr eintreten, sodaß sich dort auch keine Feststoffe mehr ablagern können. Der Ansaugkasten kann nach Abschrauben der Luftzufuhrleitung leicht von außen gereinigt werden. Jegliche Verstopfungsgefahr ist beseitigt. Die Luftauslaßöffnung erstreckt sich nur etwa über die hintere Hälfte des Rohrstutzens, sodaß in dessen Vorderbereich die Laufspaltwirkung der Rührschnecke zur Erzielung des Unterdruckes voll genutzt wird. Die Luft strömt aus der Zuführleitung durch den Ansaugkasten direkt radial in die vom Rohrstutzen begrenzte Saugzone, wobei im Bereich des Ansaugkastens eine allenfalls geringfügige Querschnittsvergrößerung erfolgt.

Dank der Merkmale gemäß Ansprüchen 7 und 8 werden im Bereich des Rohrstutzens die Saugwirkung erhöht und im vor deren freien Bereich der Rührschnecke die Schubleistung gesteigert.

Anhand der Zeichnung, die ein Ausführungsbeispiel darstellt, sei die Erfindung näher beschrieben.

Es zeigt

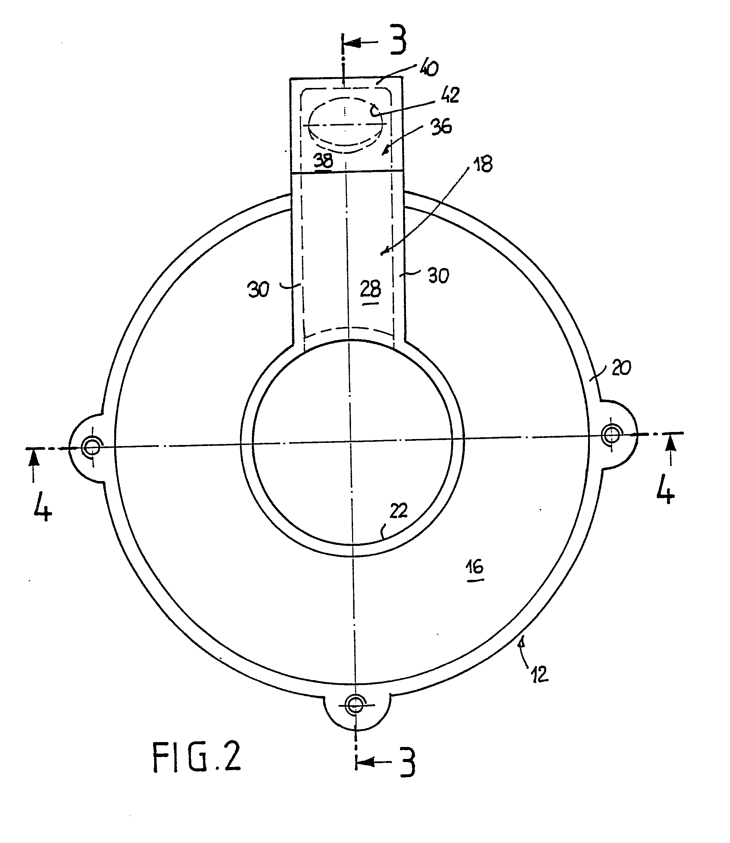

FIG. 1 eine Schnittansicht durch den Vorderteil eines Gülle-Rührwerkes, etwa längs der Linie 3-3 der FIG. 2,

FIG. 2 eine Vorderansicht der an einem Gehäuse befestigten Glocke mit Luftzufuhrsystem,

FIG. 3 eine Schnittansicht durch eine abgewandelte Ausführungsform, und

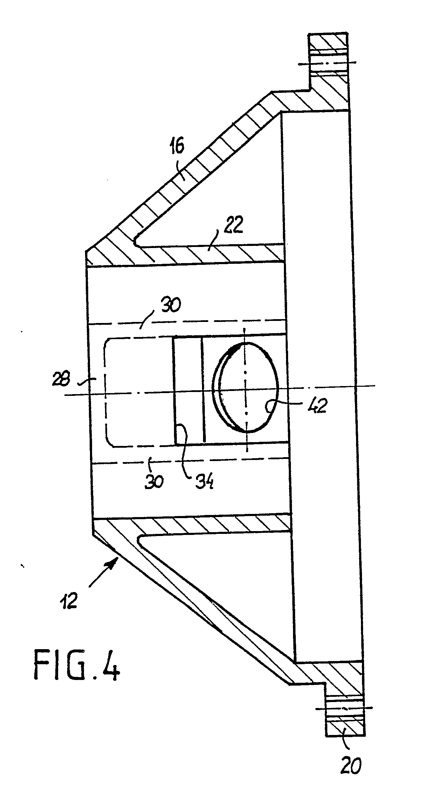

FIG. 4 eine Schnittansicht durch die Glocke längs der Linie 4-4 der FIG. 2.

An ein Gehäuse 10 eines Tauchmotors ist eine Glocke 12 angeschraubt, die eine sich zum freien Ende hin konisch erweiternde Rührschnecke 14 umgibt, die in bekannter Weise auf den Zapfen einer nicht dargestellten Antriebswelle des Tauchmotors aufgesteckt und drehfest verbunden ist. Die Glocke 12 weist einen konischen Mantelabschnitt 16 auf, der um den ganzen Umfang mit Ausnahme eines schmalen Ansaugkastens 18 herumreicht. Der konische Mantelabschnitt 16 endet hinten in einem zylindrischen Befestigungsflansch 20 und erstreckt sich unter einem spitzen Winkel von annähernd 45° nach vorn bis etwa auf den Durchmesser der Rührschnecke 14, den diese in diesem Axialbereich hat. An das Vorderende des konischen Mantelabschnittes 16 schließt sich ein nach hinten weisender innerer Rohrstutzen 22 an, der bis an die vordere Stirnfläche 24 des Tauchmotorgehäuses 10 heranreicht und zylindrisch ausgebildet ist.

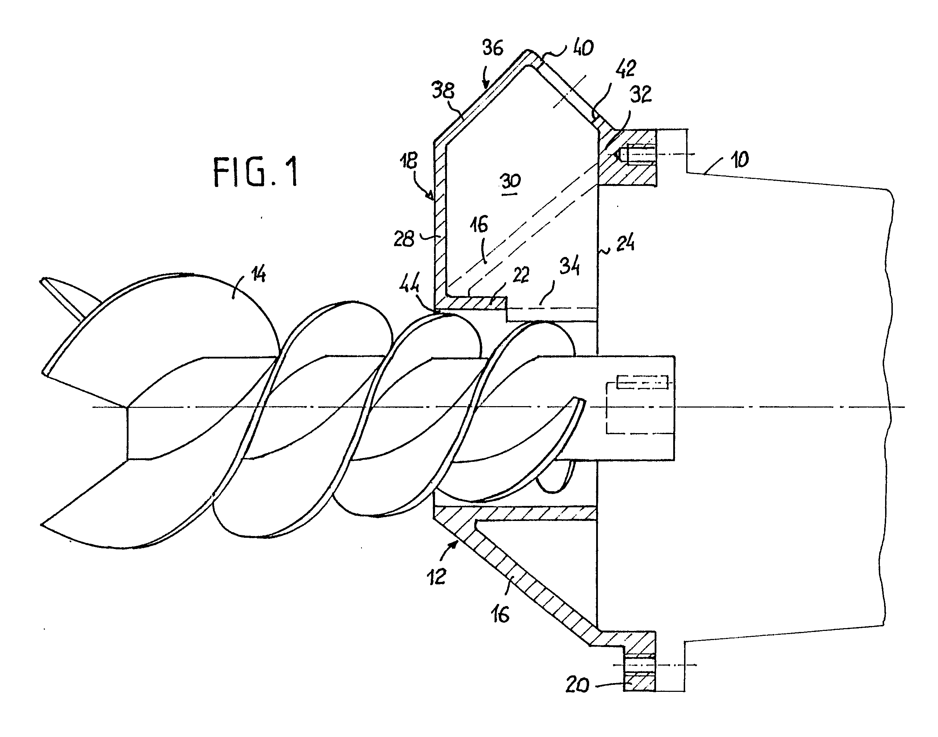

Der Ansaugkasten 18 schließt am Vorderende des Rohrstutzens 22 bzw. der konischen Mantelfläche 16 mit einer Vorderwand 28 an, die in einer Radialebene liegt. An die Vorderwand schließen sich zwei Seitenwände 30 an, die parallel zueinander liegen und nach hinten bis an den Befestigungsflansch 20 heranreichen, der im Bereich des Ansaugkastens 18 bei 32 verstärkt ist. Die konische Mantelfläche 16 ist im Bereich des Ansaugkastens 18 ausgespart, wie gestrichelt in FIG. 1 veranschaulicht ist. Die Seitenwände 30 durchsetzen die konische Mantelfläche 16 und reichen bis zum Rohrstutzen 22 herab, wo im Bereich des Ansaugkastens 18 eine Luftauslaßöffnung 34 gebildet ist.

An die, auf einer Höhe unterhalb des Außenumfanges des Befestigungsflansches 20 endende Vorderwand 28 schließt sich eine dachförmige Oberwand 36 an, die einen vorderen, nach hinten ansteigenden Abschnitt und einen daran etwa rechtwinklig anschließenden hinteren, nach hinten abfallenden Abschnitt 40 aufweist, der seinerseits zum verstärkten Bereich des Befestigungsflansches 20 führt. Im letzteren Oberwandabschnitt 40 ist eine Lufteinlaßöffnung 42 ausgebildet und es soll betont werden, daß die Breite und die Länge dieses Oberwandabschnittes 40 nur geringfügig größer als der Durchmesser der Lufteinlaßöffnung 42 ist. Mit Ausnahme der Lufteinlaßöffnung 42 und der Luftauslaßöffnung 34 ist der Ansaugkasten 18 nach außen geschlossen.

Der innere Rohrstutzen 22 ist zylindrisch und an seinem Vorderende hat die Rührschnecke 14 gerade einen solchen Durchmesser, daß ein nur sehr schmaler Laufspalt 44 verbleibt, der für eine gute Sogwirkung verantwortlich ist. Mit Ausnahme dieses engen Laufspaltes 44 befinden sich in der Glocke 12 keine weiteren Engstellen, die Luft kann vielmehr durch den nicht gezeigten Ansaugschlauch durch die Lufteinlaßöffnung 42 in den Ansaugkasten 18 gelangen und dort ohne maßgebliche Ausbreitung aufgrund des engen Querschnittes des Ansaugkastens 18 zur Luftauslaßöffnung 34 und durch diese hindurch in den Bereich der Rührschnecke 14 gelangen. Auch wenn sich also bei Stillstand des Rührwerkes der Ansaugkasten 18 mit Gülle und Feststoffen füllt, kann es dennoch nicht zu Verklebungen und Verstopfungen kommen, da mit Ausnahme des Laufspaltes 44 keine Engstellen vorhanden sind und im Bereich des Laufspaltes jegliches fasrige Gut zerkleinert und herausgedrückt wird.

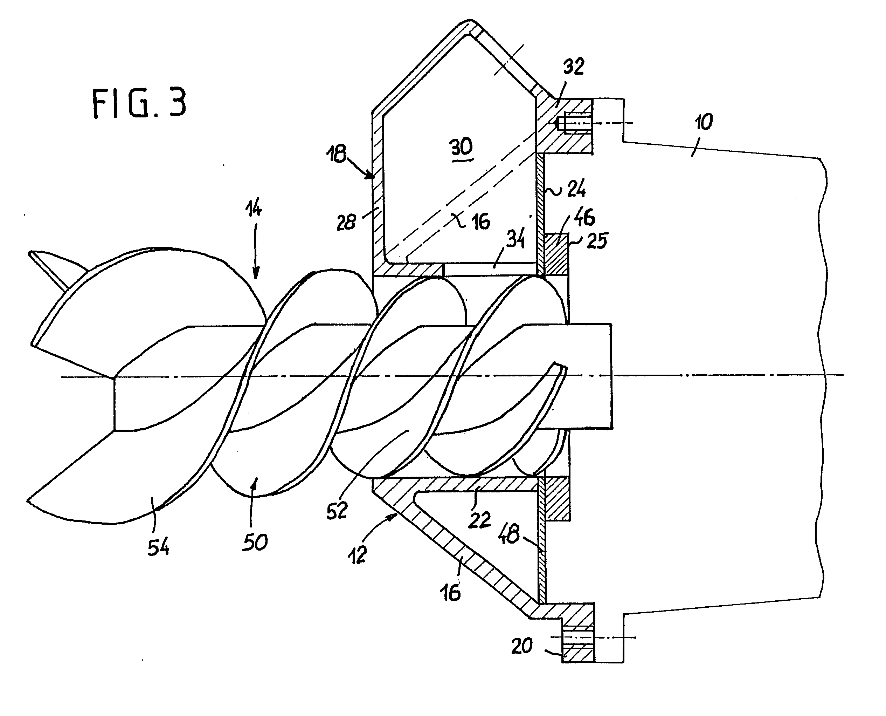

FIG.3 zeigt eine Abwandlung insofern als die Gehäusestirnfläche 24 eine ringförmige Aussparung 25 aufweist, die von einer ringförmigen Dichtungsscheibe 46 aus säurefestem Gummi ausgefüllt ist. Die vordere Stirnfläche der Dichtungsscheibe 46 liegt mit der vorderen Stirnfläche 24 des Gehäuses 10 bündig. Eine weitere dünnere ringförmige Dichtungsscheibe 48 aus demselben Material paßt in einen zylindrischen Ansatz der sich an den konischen Mantelabschnitt 16 anschließt und ist somit zentriert. Diese Dichtungsscheibe 48 hat eine zentrale kreisförmige Ausnehmung gleich dem Innendurchmesser des Rohrstutzens 22. Bei der Montage der Glocke 12 wird diese Dichtungsscheibe 48 von den Seitenwänden 30 des Ansaugkastens 18 und dem Rohrstutzen 22 geringfügig elastisch zusammengedrückt, sodaß der Blindraum zwischen konischer Mantelfläche 16 und Rohrstutzen 22 außerhalb des Ansaugkastens hermetisch geschlossen ist.

Die Flügelanordnung 50 der Rührschnecke 14 ist in Abweichung von der in FIG. 1 gezeigten Ausführung in einem hinteren Bereich 52 außen zylindrisch und im vorderen Bereich 54 konisch ausgebildet. Der zylindrische Bereich 52 erstreckt sich über die ganze Länge des Rohrstutzens 22 und bildet dort mit letzterem einen engen Laufspalt mit konstanter Spaltbreite, die für eine hohe Saugwirkung und damit einen entsprechend hohen Lufteintrag maßgeblich ist. Außerdem ist die Steigung der Flügelanordnung 50 im hinteren Bereich konstant und kleiner als die Steigung im vorderen Bereich 54.

## Ansprüche

1. Gülle-Rührwerk mit einem elektrischen Tauchmotor, in dessen Gehäuse (10) eine Motorwelle gelagert ist, die koaxial mit einer sich zum freien Ende hin konisch erweiternden Rührschnecke (14) antriebsmäßig verbunden ist, und mit einer stirnseitig am Gehäuse (10) lösbar befestigten Glocke (12), in die die Rührschnecke (14) koaxial hineinragt und mit einer an der Glocke (12) vorgesehenen Lufteinlaßöffnung zum Anschluß eines Luftzufuhrschlauches, wobei die Glocke (12) einen sich zum Vorderende hin konisch verjüngenden äußeren Mantelabschnitt (16) aufweist, dadurch gekennzeichnet, daß sich an das Vorderende des konischen Mantelabschnittes (16) der Glocke (12) ein nach hinten weisender und bis wenigstens nahe an die vordere Stirnfläche des Gehäuses (10) reichender koaxialer innerer Rohrstutzen (22) anschließt, dessen Innendurchmesser mindestens an seinem Vorderende gleich dem hier herrschenden Außendurchmesser der Rührschnecke (14) abzüglich eines für die freie Drehbarkeit der Rührschnecke (14) gerade notwendigen Laufspaltes (44) ist, daß der konische Mantelabschnitt (16) eine Aussparung aufweist, durch die sich ein im wesentlichen radial angeordneter Ansaugkasten (18) hindurch erstreckt, der mit der Glocke (12) einstückig ausgebildet ist und dessen Vorderwand (28) und Seitenwände (30) mit dem Rohr stutzen (22) verbunden sind, wobei die Hinterkanten der Seitenwände (30) und der Hinterrand des Rohrstutzens (22) etwa in derselben Radialebene dicht benachbart der vorderen Stirnfläche des Gehäuses (10) liegen und der Ansaugkasten (18) über den konischen Mantelabschnitt (16) nach außen ragt und durch eine Oberwand (36) mit Lufteinlaßöffnung (42) geschlossen ist, an die der Luftzufuhrschlauch angeschlossen ist und daß der Rohrstutzen (22) im Bereich des Ansaugkastens (18) eine Luftauslaßöffnung (34) aufweist.

2. Gülle-Rührwerk nach Anspruch 1, dadurch gekennzeichnet, daß die in Umfangsrichtung gemessene Weite der Luftauslaßöffnung (34) gleich dem lichten Abstand der Seitenwände (30) des Ansaugkastens (18) ist und daß die Luftauslaßöffnung (34) im Abstand von dem Vorderende des Rohrstutzens (22) endet.

3. Gülle-Rührwerk nach Anspruch 1 oder 2, dadurch gekennzeichnet, daß die axiale Länge der Luftauslaßöffnung (34) etwa gleich der halben Länge des Rohrstutzens (22) ist.

4. Gülle-Rührwerk nach mindestens einem der Ansprüche 1-3, dadurch gekennzeichnet, daß die Oberwand (36) des Ansaugkastens (18) dachförmig ausgebildet ist und sich aus einem vorderen, nach hinten schräg ansteigenden Abschnitt (38) und einem daran anschließenden hinteren, nach hinten schräg abfallenden Abschnitt (40) zusammensetzt, in dem die Lufteinlaßöffnung (42) ausgebildet ist, und daß der Luftzufuhrschlauch in Strömungsrichtung schräg in die Glocke (12) bzw. einen Glockenansatz (Ansaugkasten) mündet.

5. Gülle-Rührwerk nach mindestens einem der Ansprüche 1 - 4, dadurch gekennzeichnet, daß der Rohrstutzen (22) zylindrisch ausgebildet ist.

6. Gülle-Rührwerk nach mindestens einem der Ansprüche 1-5, dadurch gekennzeichnet, daß eine Flügelanordnung (50) der Rührschnecke (14) über die ganze Länge des Rohrstutzens (22) mit diesem einen engen Laufspalt mit konstanter Spaltbreite bildet.

7. Gülle-Rührwerk nach Anspruch 5 oder 6, dadurch gekennzeichnet, daß die Flügelanordnung (50) der Rührschnecke (14) im Bereich (52) des Rohrstutzens (22) einen konstanten Durchmesser aufweist und sich in dem aus der Glocke (12) herausragenden Bereich (54) konisch erweitert.

8. Gülle-Rührwerk nach mindestens einem der Ansprüche 1-7, dadurch gekennzeichnet, daß die Steigung der Flügelanordnung (50) im Bereich (52) des Rohrstutzens (22) geringer ist als in dem aus der Glocke (12) herausragenden Bereich (54).

9. Gülle-Rührwerk nach mindestens einem der Ansprüche 1-8, dadurch gekennzeichnet, daß die Flügelanordnung (50) der Rührschnecke (14) nach hinten bis etwa in die radiale Begrenzungsebene des Hinterrandes des Rohrstutzens (22) heranreicht.

10. Gülle-Rührwerk nach mindestens einem der Ansprüche 1-9, dadurch gekennzeichnet, daß zwischen dem Rohrstutzen (22) und der vorderen Stirnfläche des Gehäuses (12) eine ringförmige Dichtungsscheibe (48) angeordnet ist.

FIG.1

FIG.2

FIG.3

16

22

30

28

42

30   34

12

FIG.4

20